# EUROPEAN PATENT SPECIFICATION

(11) **EP 2 064 603 B1**
(45) Date of publication and mention of the grant of the patent: **09.01.2013**
(21) Application number: 07815884.7
(22) Date of filing: 24.09.2007
(51) Int. Cl.: G05B 19/19, B23Q 35/00, B41J 2/49, B43L 13/10, B25J 9/16, B44B 3/00

(54) **APPARATUS, SYSTEM AND COMPUTER PROGRAM FOR CONTROLLING A TOOL**
VORRICHTUNG, SYSTEM UND COMPUTERPROGRAMM ZUR STEUERUNG EINES WERKZEUGS
APPAREIL, SYSTÈME ET PROGRAMME INFORMATIQUE PERMETTANT DE COMMANDER UN OUTIL

(30) Priority: 22.09.2006 US 826619 P
(43) Date of publication of application: 03.06.2009
(73) Proprietor: Apkarian, Agop Jean Georges, Toronto, Ontario M3B 2G1 (CA)
(72) Inventor: Apkarian, Agop Jean Georges, Toronto, Ontario M3B 2G1 (CA)
(74) Representative: Forrester, Simon Joseph
(86) International application number: PCT/CA2007/001694
(87) International publication number: WO 2008/034257

(56) References cited:
- US-A- 3 733 612
- US-A- 4 306 464
- US-A- 4 519 138
- US-B1- 6 212 784
- US-B1- 6 425 185

## Description

### Field of the Invention

The present invention generally relates to devices and systems used to reproduce or replicate human handwriting. The present invention also relates generally to devices and systems used to control tools on a remote basis.

### Background of the Invention

A variety of pen writing mechanisms have been invented over the years. Mechanically, the designs typically incorporated articulated arms or XY plotter type mechanisms. One of the earlier uses of a pantograph mechanism in a writing reproduction machine is described in U.S. Patent No. 2,332,511 to Glassman et al.

U.S. Patent No. 3,733,612 to Huston et al. teaches a signature reproduction machine that converts the position of a pen with respect to a piece of paper to signals recorded on a magnetic tape. The data stored on the magnetic tape can then be played back to reproduce the writing.

Further, U.S. Patent No. 6,425,185 to Regnault et al. discloses a machine to reproduce writing, the machine including a pantograph. The machine includes a pen lift mechanism.

MITSUBISHI™ markets its MELFA™ RP-1AH/3AH/5AH industrial robot having an arm moveable along all points of a surface. The industrial robot includes a five-joint closed link mechanism that includes a series of robotic actuators at each joint.

However, these prior art references, and the prior art generally, do not disclose control of such devices that can accommodate various speeds of movement of a tool along a target area of an object, and pressures exerted by such tool on such target area. Further, these writing devices are generally intended to write on individual sheets of paper and therefore do not accommodate media of varying thicknesses. Moreover, these prior art devices are generally not operable to accept streamed data in real time, and move a tool in real time on the basis of the streamed data. Most particularly, the prior art devices are generally not operable to enable movement of a tool along a predetermined travel path, with the accuracy and speed required for numerous applications, including for example real time reproduction of human writing.

US 4,519,138 discloses an automatic drafting device having a carriage with toothed wheels in meshed engagement with a toothed rack which extends across a planar drafting surface and with a control mechanism for controlling movement of a stylus on the carriage to effect drafting operations.

US 6,212,784 discloses a programmable system employing a driver computer control programmed via a personal computer. The controller sends programmed signals to a three-dimensional coordinator circuit which generates X, Y and Z drive signals representing left, right and height positions of a scribe which is in alignment with the surface of a workpiece. Positioned between the three-dimensional coordinate circuit and the scribe is an electronic-to-mechanical conversion means in the form of a machine piston which converts the electrical X, Y and Z programmed instructions to a servo and trigger network interfaced with the scribe.

On the basis of the foregoing, what is needed is an apparatus, system and computer program for overcoming the disadvantages and shortcomings of the prior art. There is also a need for such an apparatus and system that is made of relatively inexpensive parts and that is easy to produce and maintain.

### Summary of the Invention

The present invention provides an apparatus, system and computer program for controlling movement of a tool along a defined path.

In a first aspect of the present invention, a system for controlling movement of a tool along a defined path is provided, the system including a moving assembly that is operable to hold the tool, and to move the tool within a target area of an object held adjacent to the moving assembly, characterized in that the moving assembly comprises: at least two arm members, each arm member having a first end and a second end opposite from the first end, each arm member being spaced apart from one another and linked to a base by a first pivot, and each arm member including a second pivot disposed between the first end and the second end, wherein the first pivot and the second pivot enable the arm members to move in X and Y directions; at least one first actuator linked to the arm members at the first end, the first actuator being operable to move the arm members to a plurality of locations within an associated range of motion, and a first sensor linked to the first actuator for determining the location of the arm member; a holding assembly linked to the arm members at their second end, the holding assembly being operable to hold the tool; at least one second actuator linked to the holding assembly and being operable to move the tool to a plurality of locations in a vertical axis between the holding assembly and the target area, and a second sensor linked to the second actuator for determining the location of the tool relative to the target area; and at least one controller, the controller being linked to the first actuator and the second actuator, the controller being operable to: obtain sensor data from each of the first sensor and the second sensor; extrapolate from such sensor data the location of the tool relative to the target area; based on travel path data associated with a travel path defined for the tool along the target area, generate control signals in real time for the moving assembly bringing the tool in contact with the target area in compliance with the travel path data; selectively actuate the at least one first actuator to move the arm members so as to move the tool along a selected path in the target area, including at a selected velocity; and selectively actuate the at least one second actuator to lower the tool in the vertical axis to bring the tool in contact with the target area and optionally to exert selected pressure on the target area at selected points along the selected path.

The travel path data may include coordinate data for contact between the tool and the target area, velocity of travel of the tool at selected points of the travel path, and pressure exerted on the target area at selected points of the travel path.

The controller may be operable to define the travel path data such that XY positions for the tool, velocity data associated with XY positions, and pressure data for the tool to exert on the target surface are converted into temporally equally spaced real time travel path instructions for the applicable time intervals, and to convert the travel path instructions into actuator space commands.

In an embodiment, a controller for controlling the movement of a moving assembly is provided, in accordance with the present invention. In a another aspect of the present invention a control computer program in accordance with the present invention is provided, as well as a method for controlling a system according to the first aspect.

The present invention may be an apparatus having a pantograph mechanism. The pantograph mechanism is operable to control a tool or instrument, e.g., a writing implement, such that the tool is applied to an object, e.g., a piece of paper or a book. The pantograph mechanism is movable in relation to a ground member to provide a range of motion to accommodate objects of different sizes.

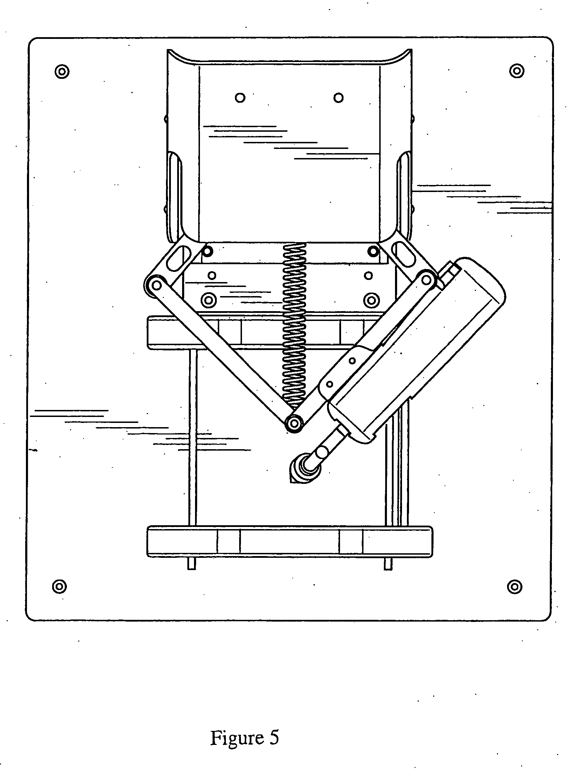

In one particular embodiment of the present invention, the pantograph mechanism, which is articulated and has two degrees of freedom, comprises: a moving frame; a stabilizing frame; a pair of inner links and a pair of outer links; and a tool link. The inner links are driven by two electric actuators whose positions can be measured using sensors. The tool link is equipped with an actuated lift mechanism whose position can be measured using a sensor. The tool link is connected to the tool. The lift mechanism is preferably spring-loaded such that a loss of power to the lift motor results in the tool being removed from the object. Preferably, a spring extending from an anchor point on the moving frame to the tool link is used to pre-load the actuators to reduce any backlash effects. Essentially, one embodiment is to pre-load the drive mechanism of the apparatus of the present invention. In a particular example of this preloading, this is accomplished by a spring placed (for example as shown in FIG. 5) so as to preloads the gearboxes on the actuators associated with the arms as well as the joints disposed on such arms. When writing is considered, the tool (in this case a pen) may relatively abrupt velocity changes in reproducing human handwriting, such velocity changes referring to changes in the speed and direction of the movement of the pen. Reproducing these changes may result in "wobbling" of the output script, particularly if the input signals of the human handwriting are obtained in real time. Pre-loading of the drive mechanism creates a "stiffness" in the mechanism overall that reduces the "wobbling" and therefore contributes to an improvement in the accuracy of the movement of the moving assembly.

In addition, a torsional spring can be included on the tool link and can be pre-loaded to account for tool weight. The moving frame is connected to the ground member by a vertical drive mechanism, the vertical drive mechanism having a motor and a sensor. The vertical drive mechanism allows the pantograph mechanism to move vertically with respect to an object. A sensor senses the contact between the stabilizing frame and an object.

In another embodiment, the present invention may be a system for controlling a tool, wherein the system is operable to receive a data feed and control the tool on the basis of the data feed. The data feed can include live data streamed to the system on a substantially real time basis.

According to a particular embodiment, the system may include a computer having a feedback control system operable to receive real time data via a network connection and can write the received data in real time. The control system may include a computer program having a trajectory generation utility that ensures that the tool moves at a maximum velocity achievable by the actuators while ensuring that all points commanded to the system are attained.

The computer program may include a control loop for maintaining contact between the tool and the object, for example a pen and paper, respectively, with programmable compliance and force, thus ensuring, for example, that the pen follows any uneven surface variations of the paper without damaging it.

### Brief Description of the Drawings

A detailed description of the preferred embodiments is provided herein below by way of example only and with reference to the following drawings, in which:
FIG. 1 illustrates an apparatus for controlling movement of a tool in accordance with the present invention;
FIG. 2 is a schematic of a contact and pressure algorithm;
FIG. 3 is a schematic of a trajectory generation algorithm;
FIG. 4 illustrates an alternate embodiment of an apparatus for controlling movement of a tool in accordance with the present invention; and
FIG. 5 illustrates another alternate embodiment of an apparatus for controlling movement of a tool in accordance with the present invention.

In the drawings, one embodiment of the invention is illustrated by way of example. It is to be expressly understood that the description and drawings are only for the purpose of illustration and as an aid to understanding, and are not intended as a definition of the limits of the invention.

### Detailed Description of the Invention

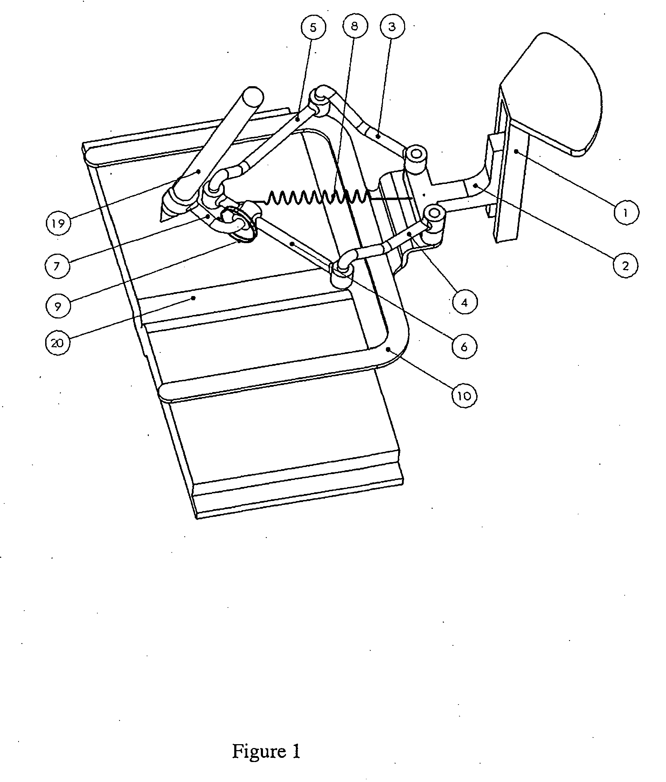

With reference to FIG. 1, an embodiment of an apparatus in accordance with the present invention includes a ground member (1) coupled to a moving frame (2) which is driven by an electrical actuator and is equipped with a position sensor. It should be understood that "ground" refers to a part of a mechanical device that remains stationary with respect to moving parts, i.e. the moving parts move relative to the ground.

In a representative embodiment, a moving frame (2) is coupled to an inner link A (3) as well as an inner link B (4). Both inner link A (3) and inner link B (4) are driven by an electric actuator equipped with a position sensor. The inner link A (3) is coupled to an outer link A (5), and the inner link B (4) is coupled to an outer link B (6). The outer link A and the outer link B are coupled together. A tool link (7) is coupled to outer link B and is driven by an electric actuator equipped with a position sensor. The tool link (7) holds a tool or instrument, for example, a pen.

A linear spring (8) is optionally connected from the coupling between outer link A and outer link B to an anchor point on the moving frame, and may be pre-tensioned to reduce any backlash. Also, a torsional spring (9) may be coupled between outer link B and the tool link and pre-loaded to counteract the mass of the tool and keep it away from the object in case of power loss.

A stabilizing frame (10), in accordance with one embodiment, may be loosely coupled to the moving frame and is equipped with sensors to detect contact with an object, for example, a book.

It should be understood that the apparatus is controlled by providing control voltages to the actuators and by measuring the sensor signals in order to apply a tool to an object in a controlled manner.

The apparatus described above is preferably linked to a computer, the computer including control software for controlling the apparatus, i.e. with sufficient data acquisition capabilities to measure the sensor states from the apparatus described above and to apply control signals to the actuators. The computer may include a network connection, with the network connection operable to asynchronously receive tool position and pressure data from a remote connection. The data could be live or recorded, and provided through an input device. For example, a suitable input device could include a standard digitizing tablet having a touch screen. It should be understood that the functionality of the controller of the present invention can also be implemented to hardware that is either linked to the apparatus or forms part of the apparatus.

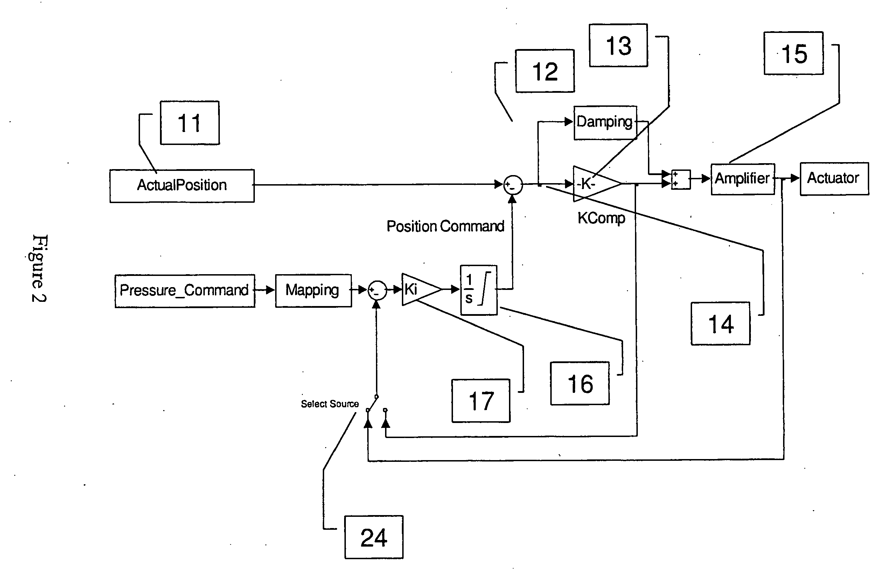

In particular, the present invention provides a contact and pressure utility (not shown) (implemented for example by means of a suitable algorithm) that is operable to control the compliance of tool contact with an object, as well as the pressure (force) applied by the tool upon the object. A block diagram of a representative contact and pressure algorithm is shown in FIG. 2, and illustrates the operation of the controller of the present invention.

The tool position is measured (11) and applied to a position control system (12) (in one representative embodiment of the present invention). In a particular implementation of the present invention, a gain KComp (13) controls the mechanical compliance of the contact. The tool lift position control system may be a standard Proportional-Derivative (PD) controller in which the P term is equivalent to the KComp term described above and naturally thereby determines the stiffness of the joint. While the tool is in contact with an object, the error between the command and the actual tool position (14) represents a measure of the current in the actuator and thus the pressure applied by the tool lift mechanism. Thus, tool pressure (in accordance with this particular implementation) is not directly measured but rather inferred from the position error and the implicit stiffness programmed via KComp.

Alternatively (24), if more accuracy is required, the current in the actuator can be directly measured from the amplifier (15) and used to calculate the applied pressure from motor characteristics. The desired pressure may be commanded to another feedback loop consisting of a pure integral control with anti-windup. As shown in the FIG. 2, this loop generates a virtual and mechanically unattainable position command to the pen lift PD controller via a limited integrator (16) with gain (17) such that the applied pressure tracks the desired pressure command in a stable manner while maintaining contact compliance.

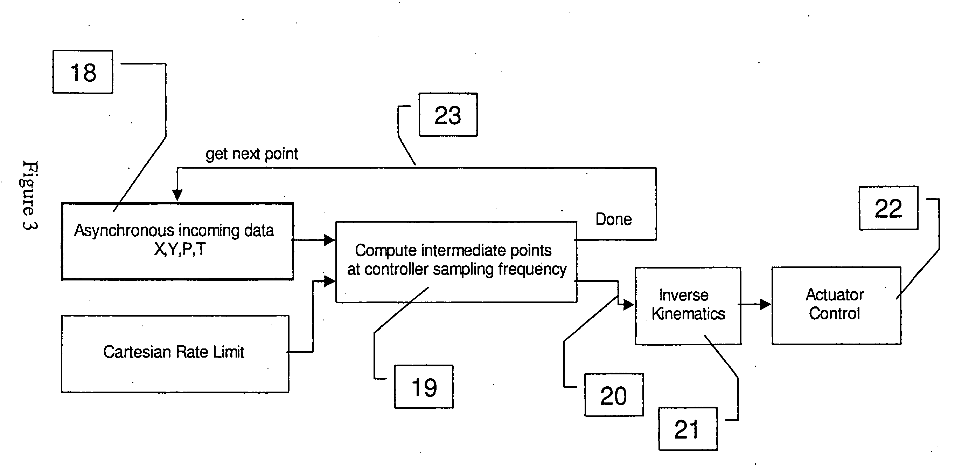

In another aspect of the present invention, the controller of the present invention is operable to generate travel path data. In one implementation of the controller, this is achieved using a trajectory generation algorithm that operates as shown in FIG. 3. The trajectory generation algorithm processes incoming data and generates real time rate and acceleration limited commands for the actuators (in the form of control voltages or signals). In particular, the trajectory generation algorithm receives commanded XY positions for the tool as well as pressure P (18) at an undetermined frequency and converts them to temporally equally spaced real time XY positions with controlled and limited and programmable Cartesian velocity (19). The processed data are output (20) to an inverse kinematics algorithm (21) that converts the Cartesian coordinates to actuator space commands which are in turn are applied to the actuator control algorithm.

Alternatively, the incoming data (18) can be time stamped (T) and the algorithm will command the robot to track the commanded positions and associated pressure with a pre set rate limit.

When asynchronous XY and P data arrives to the algorithm, the distance between the robot's present coordinates and its desired coordinates is computed. The algorithm then determines the subsequent step sizes and duration that must be commanded to the robot to ensure that the maximum accelerations and velocities are not exceeded. These steps are subsequently commanded to the robot at the real time sampling frequency of the controller until the final destination command is attained. Once this condition is achieved, the next point is obtained from the buffered data. If there is no next point, the robot holds its position until another point is reached.

If timestamps T accompany the data, the aforementioned step sizes are computed to either match the computed velocity from the timestamps T or to match the maximum speed attainable by the robot. In this approach, the robot will mimic the original motion more realistically; slowing down when the user slows down and speeding up to maximum speed when the user moves quickly.

Although the embodiment described herein and depicted in the drawings is particularly directed at controlling a writing implement to be applied to a writing surface, it should be expressly understood that the present invention can be readily extended to any application where it is desired to apply a tool to an object in a controlled fashion, especially where the tool is controlled on a remote basis. For example, the present invention can be implemented in applications for soldering using a soldering tool, manipulation of parts and tools for microassembly, surgery, microsurgery, pick-and-place manufacturing, painting, etc. The robot can also be used in cooperative tasks where it forms part of a larger system comprising two or more such (or different) robots cooperating together to complete a task.

The system of the present invention may be provided using numerous parts or sub-assemblies without departing from the present invention. FIG. 1 illustrates one particular structure in accordance with the present invention. For example, this embodiment of the invention is implemented as set out in the paragraph below.

All links are constructed in T6 aluminum. Bearings with quarter inch shafts constitute the rotational joints between the first and second links and between the two second links. MICROMO™ 35mm DC brush motors with 66:1 gearboxes are the actuators for the two first links. The tool lift mechanism is implemented using a 23mm MICROMO™ DC brush motor with a 14:1 gearbox followed by a 90 degree 3:1 gearbox. Thus the motor frame longitudinal axis is aligned with the longitudinal axis of the second link to which it is mounted. The tool holder is attached to the output of the 90 degree gear reduction. A commercially available pen is coupled to the tool holder. The vertical travel is attained using a 35mm motor with a 5:1 gear ratio driving a NOOK™ lead screw with .125" pitch into a NOOK™ ball nut. All motorized axes are equipped with US DIGITAL 1024 count incremental optical encoders. The stabilizing frame is equipped with spring-loaded microswitches which trigger when the externally exerted force pressure exceeds 0.5 lbs. A spring is extended between the joint at the tip and the frame onto which the two link motors are mounted and eliminates backlash in task space. Another spring is extended between the tool holder and the frame onto which the tool lift motor is mounted ensuring that the tool is always lifted if the motor is inactive. The motors are driven with QUANSER™ linear current amplifiers which along with all sensor signals, are interfaced to a standard desktop PC via a QUANSER™ Q4 hardware in the loop board. Control systems are designed using SIMULINK™ and run in realtime at 2kHz using the WINCON™ realtime package. All control algorithms are implemented via code generation from SIMULINK™ and application specific C based S functions. Communications with a TCP/IP network is attained via the QUANSER™ TCP/IP blocks available from the WINCON™ library.

A COMPAQ™ tablet is used as the digitizing device for handwriting. Natural handwriting is digitized using a custom application running on the tablet and streamed at the fastest possible rate to the realtime control system running the device.

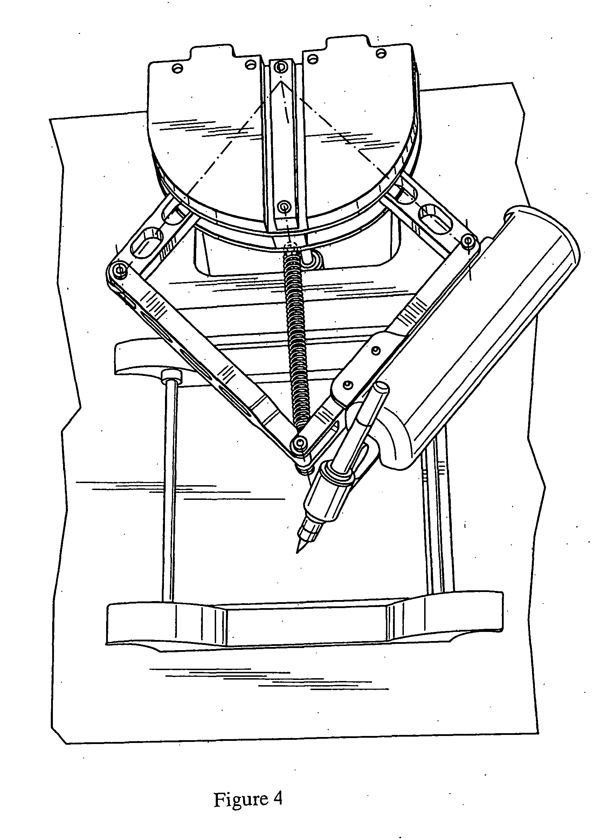

Other embodiments are possible. For example, FIG. 4 illustrates an embodiment of the invention in which the components of the moving assembly of the present invention are "inverted" relative to the embodiment illustrated in FIG. 1. Also, the parts and/or or sub-assemblies may be simplified, or for certain applications where greater speed or accuracy is desired, more complicated or costly parts, sub-assemblies, or structures may be used. FIG. 4, for example, illustrates a somewhat simpler structure than what is shown in FIG. 1, for example.

In another aspect of the present invention, a method for controlling a moving assembly is provided. In one aspect of this method, an initialization sequence in the real time code directs the vertical drive mechanism to move towards a sheet of paper (or some other target object) placed underneath it and stops moving when the sensors embedded in the stabilizing frame detect its presence. The real time control system subsequently waits for data to arrive from the tablet. When the data starts to arrive, the algorithm as described in FIG. 3 starts generating intermediate command points at the rate of 2kHz and submits them to the joint level controllers. During this time, the tool lift mechanism is also actuated via the algorithm as described in FIG. 2 and applies the appropriate pressure onto the paper. Once all these loops are active, the robot starts reproducing the handwriting onto the sheet of paper as it arrives from the tablet asynchronously.

Although the actuators used here are DC brush gearmotors, these may be replaced by DC brushless, stepper, direct drive, linear or AC motors. One could also use hydraulic or pneumatic actuators. The sensors, apart from the chosen optical incremental encoders, might be potentiometers, resolvers, magnetic encoders, absolute encoders or any other appropriate position or rate transducer. The amplifiers should of course be selected for the motors accordingly. The gearboxes need not be of the planetary type and can readily be replaced by other gearboxes or harmonic drives. The realtime control system should be deterministic but need not run on a PC. It could be embedded into any realtime processor, DSP, microcontroller or FPGA. The network connection is not limited to TCP-IP but could be any synchronous or asynchronous network connection including but not limited to serial, USB and firewire. The input device in this example is a tablet but could be any motion digitizing device such as a microscribe, a mouse or a joystick.

It will be appreciated by those skilled in the art that other variations of the preferred embodiment may also be practised without departing from the scope of the invention.

## Claims

1. A system for controlling movement of a tool along a defined path, the system including a moving assembly that is operable to hold the tool, and to move the tool within a target area of an object held adjacent to the moving assembly, **characterized in that** the moving assembly comprises:
(a) at least two arm members (3,5; 4,6), each arm member having a first end and a second end opposite from the first end, each arm member being spaced apart from one another and linked to a base by a first pivot, and each arm member including a second pivot disposed between the first end and the second end, wherein the first pivot and the second pivot enable the arm members to move in X and Y directions;
(b) at least one first actuator linked to the arm members at the first end, the first actuator being operable to move the arm members to a plurality of locations within an associated range of motion, and a first sensor linked to the first actuator for determining the location of the arm member;
(c) a holding assembly (7) linked to the arm members (3,5; 4,6) at their second end, the holding assembly being operable to hold the tool;
(d) at least one second actuator linked to the holding assembly (7) and being operable to move the tool to a plurality of locations in a vertical axis between the holding assembly and the target area, and a second sensor linked to the second actuator for determining the location of the tool relative to the target area; and
(e) at least one controller (12), the controller being linked to the first actuator and the second actuator, the controller being operable to:
(i) obtain sensor data from each of the first sensor and the second sensor;
(ii) extrapolate from such sensor data the location of the tool relative to the target area;
(iii) based on travel path data associated with a travel path defined for the tool along the target area, generate control signals in real time for the moving assembly bringing the tool in contact with the target area in compliance with the travel path data;
(iv) selectively actuate the at least one first actuator to move the arm members (3,5; 4,6) so as to move the tool along a selected path in the target area, including at a selected velocity; and
(v) selectively actuate the at least one second actuator to lower the tool in the vertical axis to bring the tool in contact with the target area and optionally to exert selected pressure on the target area at selected points along the selected path.

2. The system of claim 1 **characterized in that** the travel path data includes coordinate data for contact between the tool and the target area, velocity of travel of the tool at selected points of the travel path, and pressure exerted on the target area at selected points of the travel path.

3. The system of claim 2 **characterized in that** the moving assembly is provided such that, in the resting position, the tool is in a spaced apart relationship with the target area.

4. The system of claim 2 **characterized in that** the target area defines a selected rigid surface of the object, and the tool exerts pressure on the rigid surface by operation of the moving assembly.

5. The system of claim 1 **characterized in** the moving assembly is pre-loaded to reduce backlash effects.

6. The system of claim 5 **characterized in that** the system comprises a spring means (8) linked to the moving assembly so as to pre-load the at least one actuator.

7. The system of claim 1 **characterized in that** the tool is a writing apparatus.

8. The system of claim 1 **characterized in that** the controller (12) is operable to define the maximum velocity achievable by the at least one first actuator based on the defined travel path and to generate travel path data that maximizes the velocity achievable by the moving assembly for such travel path.

9. The system of claim 1 **characterized in that** the controller (12) is further operable to define compliance and force parameters for movement of the tool along the target area.

10. The system of claim 9 **characterized in that** the controller (12) is operable to enable movement of the tool along the defined path without damage to the object or despite irregularity in the target surface.

11. The system of claim 2 **characterized in that** the controller (12) is operable define the travel path data such that XY positions for the tool, velocity data associated with XY positions, and pressure data for the tool to exert on the target surface are converted into temporally equally spaced real time travel path instructions for the applicable time intervals, and to convert the travel path instructions into actuator space commands.

12. A control computer program, **characterized in that** the control computer program comprises computer instructions operable on a computer to enable control of the system of any preceding claim, so as to:
(a) obtain sensor data from at least one sensor associated with the moving assembly, and at least one other sensor associated with the holding assembly, such sensor data indicating the location of the tool in relation to the target area;
(b) extrapolate from such sensor data the location of the tool relative to the target area in real time; and
(c) based on the sensor data, selectively actuate:
(i) at least one first actuator linked to the moving assembly so as to move a tool linked to the moving assembly along a selected, including at a selected velocity; and
(ii) at least one second actuator linked to the holding assembly to lower the tool in the vertical axis to bring the tool in contact with the target area and optionally to exert selected pressure on the target area at selected points along the selected path.

13. A method for controlling the system of any of claims 1 to 11, **characterized in that** the method includes:
(a) receiving data regarding a defined travel path for the tool along the target area;
(b) establishing the location of one or more moving parts of the moving assembly in real time based on sensor data from one or more sensors linked to the moving assembly;
(c) establishing travel path data associated with the defined travel path, and converting such data into control signals in real time for intermediate command points for the moving assembly to bring the tool in contact with the target area in compliance with the travel path data; and
(d) sending the travel path data to one or more actuators linked to the moving assembly, thereby controlling the moving assembly to move the tool along the defined travel path.

14. The method of claims 13, **characterized in that** the travel path includes coordinate data for contact between the tool and the target area, velocity of travel of the tool at selected points of the travel, and pressure exerted on the target area at selected points of the travel path,

## Patentansprüche

1. Steuerungssystem für das Bewegen eines Geräts entlang eines definierten Pfades, das System enthaltend einen Bewegungsaufbau, ausführbar zum Halten des Geräts und zum Bewegen des Geräts innerhalb eines Zielbereichs eines neben dem Bewegungsaufbau gehaltenen Gegenstands, **dadurch gekennzeichnet, dass** der Bewegungsaufbau umfasst
(a) mindestens zwei Armabschnitte (3,5; 4,6), wobei jeder Armabschnitt ein erstes Ende hat und ein zweites Ende gegenüber vom ersten Ende, wobei jeder Armabschnitt voneinander beabstandet ist und über eine erste Achse mit einer Basis verbunden ist, und jeder Armabschnitt eine zweite Achse aufweist, angeordnet zwischen dem ersten Ende und dem zweiten Ende, wobei die erste Achse und die zweite Achse es den Armabschnitten ermöglichen, sich in eine X- und eine Y-Richtung zu bewegen;
(b) mindestens einen Servomotor, der am ersten Ende mit den Armabschnitten verbunden ist, wobei der erste Servomotor ausführbar ist zum Bewegen der Armabschnitte zu einer Anzahl Orte innerhalb eines zugehörigen Bewegungsbereichs, und einen mit dem ersten Servomotor verbundenen ersten Sensor zum Bestimmen des Orts des Armabschnitts;
(c) einen an deren zweiten Enden mit den Armabschnitten (3,5; 4,6) verbundenen Halteaufbau (7), wobei der Halteaufbau ausführbar ist zum Halten des Geräts;
(d) mindestens einen mit dem Halteaufbau (7) verbundenen zweiten Servomotor, und ausführbar zum Bewegen des Geräts an eine Anzahl Orte in einer senkrechten Achse zwischen dem Halteaufbau und dem Zielbereich, und einen mit dem zweiten Servomotor verbundenen zweiten Sensor zum Bestimmen der Position des Geräts gegenüber dem Zielbereich; und
(e) mindestens eine Steuerung (12), wobei die Steuerung mit dem ersten Servomotor und dem zweiten Servomotor verbunden ist, wobei die Steuerung ausführbar ist zum
(i) Erhalten von Sensordaten von jedem aus dem ersten Sensor und dem zweiten Sensor;
(ii) Ableiten aus solchen Sensordaten der Position des Geräts gegenüber dem Zielbereich;
(iii) auf der Basis von Bewegungspfaddaten, zugehörig zu einem für das Gerät entlang dem Zielbereich definierten Bewegungspfad, Erzeugen von Steuersignalen in Echtzeit, damit der Bewegungsaufbau das Gerät mit dem Zielbereich zusammenführen kann, entsprechend den Bewegungspfaddaten;
(iv) selektives Betätigen des mindestens einen ersten Servomotors zum Bewegen der Armabschnitte (3,5; 4,6), um das Gerät entlang einem ausgewählten Pfad im Zielbereich zu bewegen, einschließlich mit einer ausgewählten Geschwindigkeit; und
(v) selektives Betätigen des mindestens einen zweiten Servomotors zum Absenken des Geräts in der senkrechten Achse, um das Gerät mit dem Zielbereich zusammenzubringen und wahlweise zum Ausüben eines ausgewählten Drucks auf den Zielbereich an ausgewählten Punkten entlang dem ausgewählten Pfad.

2. System gemäß Anspruch 1, **dadurch gekennzeichnet, dass** die Bewegungspfaddaten enthalten Koordinatendaten für Kontakt zwischen dem Gerät und dem Zielbereich, Bewegungsgeschwindigkeit des Geräts an ausgewählten Punkten des Bewegungspfads und auf den Zielbereich ausgeübten Druck an bestimmten Punkten des Bewegungspfads.

3. System gemäß Anspruch 2, **dadurch gekennzeichnet, dass** der Bewegungsaufbau so ausgestattet ist, dass das Gerät in der Ruhestellung in einem beabstandeten Verhältnis zum Zielbereich ist.

4. System gemäß Anspruch 2, **dadurch gekennzeichnet, dass** der Zielbereich eine ausgewählte rigide Oberfläche des Gegenstands definiert und das Gerät Druck auf die rigide Oberfläche ausübt durch Betrieb des Bewegungsaufbaus.

5. System gemäß Anspruch 1, **dadurch gekennzeichnet, dass** der Bewegungsaufbau vorbeladen ist, um Rückschlageffekte zu verringern.

6. System gemäß Anspruch 5, **dadurch gekennzeichnet, dass** das System ein Federmittel (8) umfasst, verbunden mit dem Bewegungsaufbau, so dass der mindestens eine Servomotor vorgespannt wird.

7. System gemäß Anspruch 1, **dadurch gekennzeichnet, dass** das Gerät eine Schreibvorrichtung ist.

8. System gemäß Anspruch 1, **dadurch gekennzeichnet, dass** die Steuerung (12) ausführbar ist zum Definieren der vom ersten Servomotor erreichbaren Höchstgeschwindigkeit, auf der Basis des definierten Bewegungspfads und zum Erzeugen von Bewegungspfaddaten, welche die durch den Bewegungsaufbau erreichbare Geschwindigkeit für einen solchen Bewegungspfad maximieren.

9. System gemäß Anspruch 1, **dadurch gekennzeichnet, dass** die Steuerung (12) zudem ausführbar ist zum Definieren von Federungs- und Kraftparametern für das Bewegen des Geräts entlang des Zielbereichs.

10. System gemäß Anspruch 9, **dadurch gekennzeichnet, dass** die Steuerung (12) ausführbar ist zum Ermöglichen von Bewegung des Geräts entlang eines definierten Pfads ohne Schaden am Gegenstand oder trotz Unregelmäßigkeit an der Zieloberfläche.

11. System gemäß Anspruch 2, **dadurch gekennzeichnet, dass** die Steuerung (12) ausführbar ist zum Definieren der Bewegungspfaddaten, so dass XY-Positionen für das Gerät, mit den XY-Positionen einhergehende Geschwindigkeitsdaten sowie Druckdaten für das Gerät zum Ausüben auf die Gegenstandsoberfläche, in zeitlich einheitlich beabstandete Echtzeit-Bewegungspfadanweisungen für die anwendbaren Zeitabstände umgewandelt werden, und zum Umwandeln der Bewegungspfadanweisungen in Servomotor-Raumbefehle.

12. Steuerungscomputerprogramm, **dadurch gekennzeichnet, dass** das Steuerungscomputerprogramm umfasst auf einem Computer ausführbare Anweisungen zum Ermöglichen einer Steuerung des Systems aus irgendeinem vorhergehenden Anspruch, so dass:
(a) Sensordaten von mindestens einem dem Bewegungsaufbau zugehörigen Sensor erhalten werden, und von mindestens einem weiteren dem Halteaufbau zugehörigen Sensor, wobei solche Sensordaten die Position des Geräts gegenüber dem Zielbereich angeben;
(b) aus solchen Sensordaten die Position des Geräts gegenüber dem Zielbereich in Echtzeit abgeleitet wird; und
(c) auf der Basis der Sensordaten, selektive geschaltet wird:
(i) mindestens ein mit dem Bewegungsaufbau verbundener erster Servomotor, so dass ein mit dem Bewegungsaufbau verbundenes Gerät entlang eines ausgewählten bewegt wird, einschließlich mit einer ausgewählten Geschwindigkeit; und
(ii) mindestens ein mit dem Halteaufbau verbundener zweiter Servomotor, zum Absenken des Geräts in der senkrechten Achse, um das Gerät mit dem Zielbereich zusammenzubringen und wahlweise zum Ausüben eines ausgewählten Drucks auf den Zielbereich an ausgewählten Punkten entlang dem ausgewählten Pfad.

13. Steuerungsverfahren für das System aus irgendeinem der Ansprüche 1 bis 11, **dadurch gekennzeichnet, dass** das Verfahren umfasst:
(a) Empfangen von Daten betreffend einen definierten Bewegungspfad für das Gerät entlang dem Zielbereich;
(b) Bestimmen der Position von einem oder mehr beweglichen Teilen des Bewegungsaufbaus in Echtzeit, auf der Basis von Sensordaten aus einem oder mehreren mit dem Bewegungsaufbau verbundenen Sensoren;
(c) Bestimmen von zum definierten Bewegungspfad zugehörigen Bewegungspfaddaten, und Umwandeln solcher Daten in Steuerungssignale in Echtzeit, für zwischenliegende Steuerungspunkte, damit der Bewegungsaufbau das Gerät mit dem Zielbereich entsprechend den Bewegungspfaddaten zusammenbringt; und
(d) Versenden der Bewegungspfaddaten an einen oder mehrere mit dem Bewegungsaufbau verbundene Servomotoren, wodurch der Bewegungsaufbau so gesteuert wird, dass er das Gerät entlang dem definierten Bewegungspfad zu bewegt.

14. Verfahren gemäß Anspruch 13, **dadurch gekennzeichnet, dass** der Bewegungspfad Koordinatendaten aufweist zum Zusammenbringen des Geräts und des Zielbereichs, Bewegungsgeschwindigkeit des Geräts an bestimmten Bewegungspunkten, und an bestimmten Punkten am Bewegungspfad auf den Zielbereich ausgeübten Druck.

## Revendications

1. Un système de commande de déplacement d'un outil le long d'un trajet défini, le système comprenant un ensemble mobile qui est actionnable de façon à maintenir l'outil et de façon à déplacer l'outil à l'intérieur d'une zone cible d'un objet maintenu adjacent à l'ensemble mobile, **caractérisé en ce que** l'ensemble mobile comprend :
(a) au moins deux éléments bras (3,5 ; 4,6), chaque élément bras possédant une première extrémité et une deuxième extrémité opposée à la première extrémité, chaque élément bras étant espacé des autres et relié à une base par un premier pivot, et chaque élément bras comprenant un deuxième pivot disposé entre la première extrémité et la deuxième extrémité, où le premier pivot et le deuxième pivot permettent aux éléments bras de se déplacer dans les directions X et Y,
(b) au moins un premier actionneur relié aux éléments bras au niveau de la première extrémité, le premier actionneur étant actionnable de façon à déplacer les éléments bras vers une pluralité d'emplacements à l'intérieur d'une plage de mouvement associée, et un premier capteur relié au premier actionneur de façon à déterminer l'emplacement de l'élément bras,
(c) un ensemble de maintien (7) relié aux éléments bras (3,5 ; 4,6) au niveau de leur deuxième extrémité, l'ensemble de maintien étant actionnable de façon à maintenir l'outil,
(d) au moins un deuxième actionneur relié à l'ensemble de maintien (7) et étant actionnable de façon à déplacer l'outil vers une pluralité d'emplacements dans un axe vertical entre l'ensemble de maintien et la zone cible, et un deuxième capteur relié au deuxième actionneur de façon à déterminer l'emplacement de l'outil par rapport à la zone cible, et
(e) au moins un système de commande (12), le système de commande étant relié au premier actionneur et au deuxième actionneur, le système de commande étant actionnable de façon à :
(i) obtenir des données de capteur de chacun des premier capteur et deuxième capteur,
(ii) extrapoler à partir desdites données de capteur l'emplacement de l'outil par rapport à la zone cible,
(iii) en fonction de données de trajet de parcours associées à un trajet de parcours défini pour l'outil le long de la zone cible, générer des signaux de commande en temps réel pour l'ensemble mobile afin de placer l'outil en contact avec la zone cible conformément aux données de trajet de parcours,
(iv) actionner de manière sélective le au moins un premier actionneur de façon à déplacer les éléments bras (3,5 ; 4,6) afin de déplacer l'outil le long d'un trajet sélectionné dans la zone cible, y compris à une vélocité sélectionnée, et
(v) actionner de manière sélective le au moins un deuxième actionneur de façon à abaisser l'outil dans l'axe vertical afin de placer l'outil en contact avec la zone cible et éventuellement d'exercer une pression sélectionnée sur la zone cible à des points sélectionnés le long du trajet sélectionné.

2. Le système selon la revendication 1 **caractérisé en ce que** les données de trajet de parcours contiennent des données de coordonnées pour un contact entre l'outil et la zone cible, une vélocité de parcours de l'outil à des points sélectionnés du trajet de parcours, et une pression exercée sur la zone cible à des points sélectionnés du trajet de parcours.

3. Le système selon la revendication 2 **caractérisé en ce que** l'ensemble mobile est configuré de sorte que, dans la position de repos, l'outil est dans une relation espacée avec la zone cible.

4. Le système selon la revendication 2 **caractérisé en ce que** la zone cible définit une surface rigide sélectionnée de l'objet, et l'outil exerce une pression sur la surface rigide par un actionnement de l'ensemble mobile.

5. Le système selon la revendication 1 **caractérisé en ce que** l'ensemble mobile est préchargé de façon à réduire des effets de recul.

6. Le système selon la revendication 5 **caractérisé en ce que** le système comprend un moyen de ressort (8) relié à l'ensemble mobile destiné à précharger le au moins un actionneur.

7. Le système selon la revendication 1 **caractérisé en ce que** l'outil est un appareil d'écriture.

8. Le système selon la revendication 1 **caractérisé en ce que** le système de commande (12) est actionnable de façon à définir la vélocité maximale atteignable par le au moins un premier actionneur en fonction du trajet de parcours défini et de façon à générer des données de trajet de parcours qui maximisent la vélocité atteignable par l'ensemble mobile pour ledit trajet de parcours.

9. Le système selon la revendication 1 **caractérisé en ce que** le système de commande (12) est en outre actionnable de façon à définir des paramètres de force et de conformité pour le déplacement de l'outil le long de la zone cible.

10. Le système selon la revendication 9 **caractérisé en ce que** le système de commande (12) est actionnable de façon à permettre un déplacement de l'outil le long du trajet défini sans dommage à l'objet ou en dépit d'irrégularités sur la surface cible.

11. Le système selon la revendication 2 **caractérisé en ce que** le système de commande (12) est actionnable de façon à définir les données de trajet de parcours de sorte que des positions XY pour l'outil, des données de vélocité associées à des positions XY, et des données de pression à exercer par l'outil sur la surface cible soient converties en instructions de trajet de parcours en temps réel espacées de manière égale dans le temps pour les intervalles de temps applicables, et de façon à convertir les instructions de trajet de parcours en commandes d'espace actionneur.

12. Un programme informatique de commande, **caractérisé en ce que** le programme informatique de commande comprend des instructions informatiques utilisables sur un ordinateur de façon à permettre une commande du système selon l'une quelconque des revendications précédentes de façon à :
(a) obtenir des données de capteur provenant d'au moins un capteur associé à l'ensemble mobile, et d'au moins un autre capteur associé à l'ensemble de maintien, lesdites données de capteur indiquant l'emplacement de l'outil par rapport à la zone cible,
(b) extrapoler à partir desdites données de capteur l'emplacement de l'outil par rapport à la zone cible en temps réel, et
(c) en fonction des données de capteur, actionner de manière sélective :
(i) au moins un premier actionneur relié à l'ensemble mobile de façon à déplacer un outil relié à l'ensemble mobile le long d'un trajet sélectionné, y compris à une vélocité sélectionnée, et
(ii) au moins un deuxième actionneur relié à l'ensemble de maintien de façon à abaisser l'outil dans l'axe vertical afin de placer l'outil en contact avec la zone cible et éventuellement d'exercer une pression sélectionnée sur la zone cible à des points sélectionnés le long du trajet sélectionné.

13. Un procédé de commande du système selon l'une quelconque des revendications 1 à 11, **caractérisé en ce que** le procédé comprend :
(a) la réception de données concernant un trajet de parcours défini pour l'outil le long de la zone cible,
(b) l'établissement de l'emplacement d'une ou plusieurs pièces mobiles de l'ensemble mobile en temps réel en fonction de données de capteur provenant d'un ou plusieurs capteurs reliés à l'ensemble mobile,
(c) l'établissement de données de trajet de parcours associées au trajet de parcours défini, et la conversion desdites données en signaux de commande en temps réel pour des points de commande intermédiaires pour l'ensemble mobile afin de placer l'outil en contact avec la zone cible conformément aux données de trajet de parcours, et
(d) l'envoi des données de trajet de parcours à un ou plusieurs actionneurs reliés à l'ensemble mobile, commandant ainsi l'ensemble mobile de façon à déplacer l'outil le long du trajet de parcours défini.

14. Le procédé selon la revendication 13, **caractérisé en ce que** le trajet de parcours contient des données de coordonnées pour un contact entre l'outil et la zone cible, une vélocité de parcours de l'outil à des points sélectionnés du parcours, et une pression exercée sur la zone cible à des points sélectionnés du trajet de parcours.
